# EUROPÄISCHE PATENTSCHRIFT

(11) **EP 0 984 216 B1**
(45) Veröffentlichungstag und Bekanntmachung des Hinweises auf die Patenterteilung: **07.05.2003**
(21) Anmeldenummer: 99116585.3
(22) Anmeldetag: 25.08.1999
(51) Int. Cl.: F16K 41/10

(54) **Rohrabsperrvorrichtung**
Pipe closure device
Dispositif de fermeture pour conduit

(30) Priorität: 03.09.1998 DE 19840160
(43) Veröffentlichungstag der Anmeldung: 08.03.2000
(73) Patentinhaber: Präzisionsarmaturen Ostfalenpark Barleben GmbH, 39179 Barleben (DE)
(72) Erfinder: Fichtner, Lothar, 34471 Volkmarsen (DE); Rosam, Markus, 39167 Niederndodeleben (DE)
(74) Vertreter: WALTHER, WALTHER & HINZ Patentanwälte

(56) Entgegenhaltungen:
- EP-A- 0 275 357
- DE-A- 3 730 896
- DE-A- 4 100 862
- GB-A- 891 352

## Beschreibung

Die Erfindung betrifft eine Rohrabsperrvorrichtung, umfassend eine Spindel, die mit einem in einem Gehäuse angeordneten Absperrorgan in Verbindung steht, wobei die Spindel in einem Gehäuseoberteil axial verschieblich gelagert ist, wobei das Gehäuseoberteil einen Gehäusedeckel aufweist, der auf dem Gehäuse aufsitzt, wobei der Innenraum des Gehäusedeckels mit dem durch das Gehäuse geführten Medium in Verbindung steht.

Eine Rohrabsperrvorrichtung der eingangs genannten Art wird bereits seit einer Reihe von Jahren hergestellt. Es hat sich jedoch herausgestellt, dass bei Rohrabsperrvorrichtungen, insbesondere wenn es sich um Absperrschieber handelt, teilweise große Hübe verwirklicht werden müssen. Dies im Gegensatz zu Ventilabdichtungen, die mit relativ geringen Hüben auskommen. Denn bei Rohrabsperrvorrichtungen der eingangs genannten Art ist immer die Notwendigkeit gegeben, das eigentliche Absperrorgan, also den Keil vollständig aus dem offenen Querschnitt des Rohres zu entfernen. Insbesondere bei großen Nennweiten musste daher ein erheblicher Aufwand getrieben werden, um die Rohrabsperrvorrichtung gegenüber der Umgebung abzudichten.

Der Erfindung liegt daher die Aufgabe zugrunde, eine Rohrabsperrvorrichtung der eingangs genannten Art bereitzustellen, mit der beispielsweise durch Schieber verschließbare Rohre großer Nennweiten dauerhaft und zuverlässig gegenüber der Umgebung abgedichtet werden können, so dass in jedem Fall sichergestellt ist, dass das in der Rohrleitung geführte Medium nicht nach außen dringen kann. Dies ist insbesondere dann von Interesse, wenn es sich um aggressive oder giftige Medien handelt.

Die Aufgabe wird erfindungsgemäß dadurch gelöst, dass die Spindel an ihrem unteren, dem Absperrorgan zugewandten Ende einen Ring aufweist, wobei an dem Ring mindestens zwei konzentrisch zueinander zugeordnete, vorzugsweise metallische Bälge stoffdicht angeordnet sind, wobei der eine innere Balg mit der Spindel und der andere äußere Balg mit dem oberen Ende , d. h. dem Flansch des Gehäusedeckels in Verbindung steht. Der Flansch besitzt eine Bohrung zum Durchlass der Spindel. Neben dem Flansch zeigt der Gehäusedeckel noch einen sich an den Flansch anschließenden hülsenförmigen Deckelkörper. Bei den beiden konzentrisch zueinander und zu der Spindel angeordneten Bälgen sind die beiden Bälge an ihrem unteren Ende mit dem Ring beispielsweise verschweißt. Der innere Balg ist weiterhin mit der Spindel stoffdicht z. B. durch Schweißen verbunden. Der äußere Balg ist am oberen Ende mit dem Flansch des Gehäusedeckels verschweißt oder sonstwie stoffdicht verbunden. Hierdurch wird zwischen der äußeren Wandseite des inneren Balges und der inneren Wandseite des äußeren Balges ein Hohlraum geschaffen, der nicht mit dem im Gehäuse geführten Medium in Verbindung steht. Genau dieser Raum steht aber mit der Bohrung der Spindel durch den Flansch des Gehäusedeckels in Verbindung, so dass sichergestellt ist, dass bei intakten Bälgen keinerlei Medium durch die Bohrung zwischen Deckel und Spindel austreten kann. Durch die Anordnung zweier konzentrisch ineinander gelagerter Bälge in einem rohrartig ausgebildeten Gehäusedeckel wird weiterhin erreicht, dass eine kurze Bauhöhe sowohl der Spindel an sich, als auch der abzudichtenden Bälge verwirklicht werden kann.

Wie bereits zu eingangs erwähnt, war die Abdichtung von Rohrabsperreinrichtungen bei Gehäusen großer Nennweite mittels Schiebern sehr aufwendig; der Einsatz von langen Bälgen zur Abdichtung verbot sich, weil die Bälge mit zunehmender Länge dazu neigen auszuknicken, bzw. bereits bei geringem Innendruck ausbauchen. Durch die Anordnung zweier konzentrisch ineinander gelagerter Bälge wird die Länge der einzelnen Bälge, wie bereits erläutert, derart reduziert, dass weder die Gefahr des Ausbauchens bei Innendruck noch des Ausknickens aufgrund überhöhter Länge besteht. Gleichzeitig wird, wie ebenfalls zu eingangs bereits erwähnt, erreicht, dass die Spindel selbst eine geringere Bauhöhe aufweisen kann, was Vorteile in Bezug auf die Fertigung mit sich bringt.

Wie bereits ausgeführt, ist der innere Balg mit der Spindel verbunden. Hierbei ist vorzugsweise vorgesehen, dass der innere Balg an seinem oberen Ende einen Übergangsring zur Verbindung mit der Spindel aufweist. Dies deshalb, weil der Balg, der beispielsweise aus Metall hergestellt ist, einen relativ geringen Materialquerschnitt aufweist, die Spindel jedoch eine große Masse hat. Um bei einer stoffschlüssigen Verbindung des Balges mit der Spindel z. B. durch Schweißen zu verhindern, dass der Balg ausglüht, ist der Übergangsring vorgesehen, der einen Querschnitt aufweist, der zwischen dem der Spindel und dem des Balges liegt.

Nach einem weiteren Merkmal der Erfindung ist der Ring, einerseits axial beweglich auf der Spindel und andererseits axial beweglich im Gehäusedeckel, d. h. in dem hülsenförmigen Deckelkörper des Gehäusedeckels angeordnet bzw. geführt. Hierbei weist vorteilhaft die Spindel eine Anlage, beispielsweise in Form eines umlaufenden Absatzes, für den Ring auf. Durch die axial bewegliche Anordnung des Ringes sowohl auf der Spindel als auch in dem hülsenförmigen Deckelkörper wird erreicht, dass beispielsweise dann, wenn der Keil aus dem Rohr herausgezogen wird, mithin die Spindel axial nach oben wandert, zunächst der innere Balg gedehnt wird. Ab einer bestimmten Dehnung des inneren Balges wandert der Ring entsprechend der Bewegung der Spindel ebenfalls nach oben. Dies geschieht im Einzelnen dadurch, dass die Spindel einen Halter für das Absperrorgan aufweist, der ab einem bestimmten vertikalen Spindelversatz an den Ring anschlägt, und auf diese Weise diesen mitnimmt. Es findet demzufolge, wie bereits ausgeführt, eine Aufteilung des Weges bei der axialen Verformung der Bälge zwischen den beiden Bälgen insoweit statt, als jeder Balg hierdurch nur einen bestimmten, relativ geringen Weg zurücklegen muss, was den Einsatz von verhältnismäßig kurzen Bälgen ermöglicht, mit den Vorteilen, die bereits zuvor erläutert wurden.

Nach einem weiteren Merkmal der Erfindung ist vorgesehen, dass der innere Balg von dem Druck des Mediums innen beaufschlagt wird, wohingegen der äußere Balg von dem Druck des Mediums außen beaufschlagt wird. Das heißt, der kürzere Balg wird von innen beaufschlagt, was allerdings unkritisch ist, da dieser aufgrund seiner geringen Länge daher nicht zum Ausbauchen neigt. Die Belastung des äußeren Balges mit dem Druck des Mediums auf seinen äußeren Umfang ist in jedem Fall ebenfalls unkritisch, da die Bälge relativ hohen Außendrücken standhalten können. Im Einzelnen ist hierzu vorgesehen, dass der Ring einen Durchlass zum Innenraum des inneren Balges aufweist, und einen Durchlass zu dem Raum zwischen Innenwandung des hülsenförmigen Körpers des Gehäusedeckels und Außenwandung des äußeren Balges zeigt, die das Abströmen von eingedrungenem Medium garantieren. Diese Durchlässe werden demzufolge auch als Entlastungsbohrungen bezeichnet.

Sollte dennoch einmal eine Beschädigung eines Balges erfolgen, so ist im Gehäusedeckel eine die Spindel umgebende Stopfbuchse vorgesehen, die als zusätzliche Sicherheit zum Fernhalten des Mediums von der Umgebung dient. Die Stopfbuchse selbst ist in einem Stopfbuchsengehäuse im Gehäusedeckel angeordnet. Hierbei ist vorteilhaft vorgesehen, dass die Befestigung des äußeren Balges am Stopfbuchsengehäuse in der zuvor beschriebenen Weise erfolgt.

Nach einem weiteren vorteilhaften Merkmal ist die Spindel gegen Torsion gesichert. Eine derartige Torsionssicherung dient dazu zu verhindern, dass schlussendlich die Bälge auf Torsion beansprucht werden, was diese unmittelbar zerstören würde. Das Gehäuseoberteil besitzt eine Gehäusebrücke zur Führung der Spindel, wobei die Gehäusebrücke durch mehrere Säulen mit dem Gehäusedeckel verbunden ist, wobei die Säulen. die Torsionssicherung aufnehmen. Die Torsionssicherung selbst besteht hierbei im Einzelnen aus einer Platte, die drehfest, aber axial beweglich die Spindel umgibt, und die als Gegenlager an den Säulen zwischen Gehäusedeckel und Gehäusebrücke angeordnet ist. Die Gehäusebrücke selbst zeigt ein Gewinde zur axial beweglichen Führung der Spindel.

Anhand der Zeichnungen wird die Erfindung nachstehend beispielhaft näher erläutert:

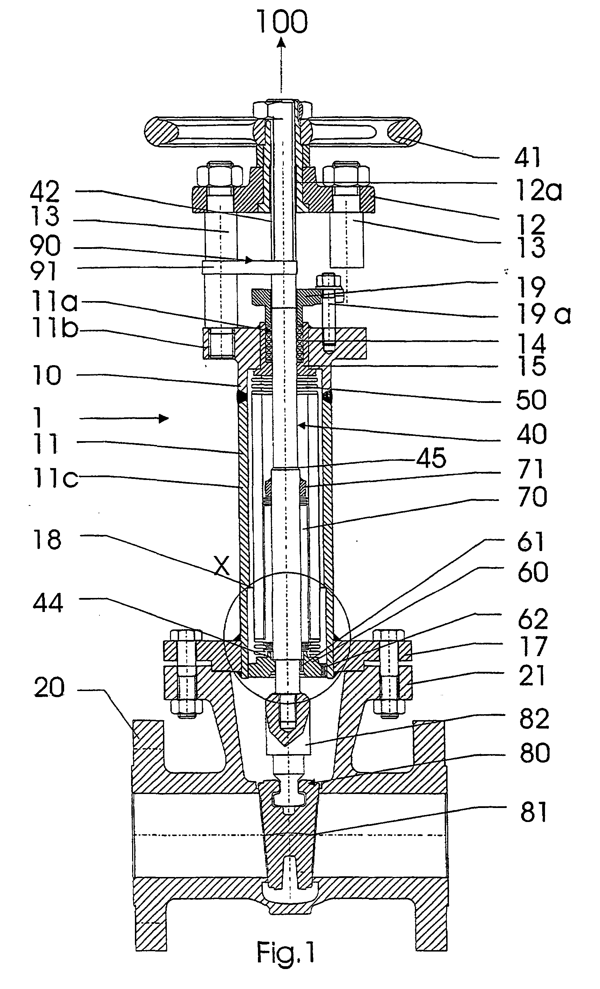

- Fig. 1: zeigt die gesamte Rohrabsperrvorrichtung in einer Ansicht im Schnitt;

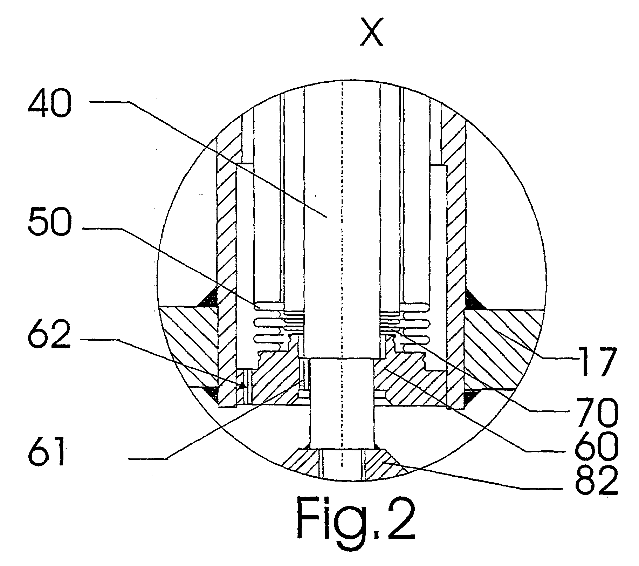

- Fig. 2: zeigt die Einzelheit X in vergrößerter Darstellung.

Die insgesamt mit 1 bezeichnete Rohrabsperrvorrichtung besteht aus dem Gehäuseoberteil 10, dem Gehäuse 20 mit dem Flansch 21, wobei der Flansch 21 das Gehäuseoberteil 10 der Rohrabsperrvorrichtung aufnimmt. Das Gehäuseoberteil 10 der Rohrabsperrvorrichtung setzt sich zusammen aus dem Gehäusedeckel 11, der mit der Gehäusebrücke 12 durch vorzugsweise zwei Säulen 13 verbunden ist. Der Gehäusedeckel 11 zeigt am oberen Ende den Flansch 11b mit der Bohrung 11a für die Spindel 40. An den Flansch 11b schließt sich der hülsenförmige Deckelkörper 11c an, wobei der Flansch der Aufnahme der Säulen 13 dient. Der Gehäusedeckel 11 weist an seinem unteren, dem Rohr zugewandten Ende einen Flansch 17 auf, der mit dem Flansch 21 des Gehäuses verbunden ist.

In dem Gehäuseoberteil 10 ist die insgesamt mit 40 bezeichnete Spindel geführt. Die mit 40 bezeichnete Spindel besitzt an ihrem oberen Ende das Handrad 41 und ist in der Gehäusebrücke 12 durch ein in der Gehäusebrücke 12 angeordnetes Gewinde 12a axial beweglich geführt. Das heißt, dass die Spindel 40 in diesem Bereich ebenfalls ein Gewinde 42 zeigt. Die Spindel 40 weist darüber hinaus die umlaufend konische Anlagefläche 45 auf, für die das untere Ende des Stopfbuchsengehäuses 15 als Anlage dient. Die Spindel 40 taucht im Bereich des Flansches 11b durch die Bohrung 11a in den Gehäusedeckel 11 ein. Hierbei besitzt der Flansch 11b im Bereich der Bohrung 11a eine Stopfbuchse 14, die in einem Stopfbuchsengehäuse 15 gelagert ist. Die Stopfbuchse 14 dient der zusätzlichen Absicherung gegen den Austritt von im Gehäuse 20 geführten Medium aus dem Gehäusedeckel heraus. Zur Sicherung der Stopfbuchse 14 ist eine Stopfbuchsbrille 19 vorgesehen, die mittels der Schraube 19a gegen die Stopfbuchse pressbar ist.

Am unteren Ende des Stopfbuchsengehäuses ist der äußere Balg 50 angeschweißt. Der äußere Balg 50 ist an seinem anderen unteren Ende mit dem Ring 60 ebenfalls verschweißt. Konzentrisch zu dem äußeren Balg 50 befindet sich der innere Balg 70. Der innere Balg 70 ist ebenfalls an dem Ring 60 angeschweißt, jedoch am obere Ende durch den Übergangsring 71 mit der Spindel 40 durch eine Schweißnaht verbunden. Der Ring 60 besitzt zwei Durchlässe 61 und 62. Der Durchlass 61 steht mit dem Innenraum des Balges 70 in Verbindung, wohingegen der Durchlass 62 mit dem Raum zwischen der äußeren Wandung des äußeren Balges 50 und der inneren Wandung des hülsenförmigen Deckelkörpers 11c des Gehäusedeckels 11 in Verbindung steht. Die Spindel 40 besitzt darüber hinaus den Absatz 44 als Anlage, an dem der Ring 60 anliegt. Der Gehäusedeckel 11 zeigt darüber hinaus einen weiteren Absatz 18, der ebenfalls der Anlage des Ringes 60 bei entsprechender Bewegung der Spindel 40 dient.

Unterhalb des Ringes 60 befindet sich an der Spindel das in das Gehäuse 20 ragende Absperrorgan, das insgesamt mit 80 bezeichnet ist. Das Absperrorgan 80 zeigt den Keil 81 und den Halter für den Keil, der die Nummer 82 trägt und der unmittelbar mit der Spindel 40 verbunden ist.

Die Spindel 40 ist gegen Torsion gesichert; hierzu ist eine Torsionssicherung 90 vorgesehen, die aus einer Platte 91 besteht, die durch die Säule 13 gehalten ist. Im Bereich der Spindel nimmt die Platte 91 die Spindel axialbeweglich aber verdrehfest auf, so dass, wie bereits ausgeführt, eine Verdrehung der Spindel in sich ausgeschlossen ist.

Um den Verschleiß im Bereich der Bälge 50 und 70 gering zu halten, ist vorgesehen, dass der innere Balg auf Druck vorgespannt ist. Das heißt, dass bei Hub der Balg zunächst entlastet wird und erst dann auf Zug beansprucht wird. Der äußere Balg hingegen ist auf Zug vorgespannt, d. h., dass bei einem Hub der äußere Balg zunächst ebenfalls entlastet wird und dann auf Druck belastet wird. Die Vorspannung des jeweiligen Balges kann hierbei derart sein, dass bei der Hälfte des maximalen Hubes der jeweiligen Spindel eine vollständige Entlastung des jeweiligen Balges erfolgt.

Die Arbeitsweise der Absperrvorrichtung ist nun derart, dass bei Öffnung des Absperrorgans 81, d. h. bei Bewegung der Spindel in Richtung des Pfeiles 100, der innere Faltenbalg 70 seinen Hub ausübt, bis der Halter 82 an den Ring 60 anschlägt. Danach durchführt der äußere Balg 50 seinen Hub, bis die konische Fläche 45 an dem unteren, entsprechend konisch ausgebildeten Ende des Stopfbuchsengehäuses 15 anliegt. Das Stopfbuchsengehäuse 15 dient hierbei als Anschlag für den äußeren Balg; die Fläche 45 dient in der Offenstellung des Schiebers bei Anlage an die entsprechend konische Ausnehmung des Stopfbuchsengehäuses 15 als metallische Rückdichtung nach außen hin bei defektem Balg. In dieser Position liegt der Ring 60 konstruktiv nicht an. Es ist ein Spiel von 1 - 2 mm vorhanden. Es ist primär wichtig, dass immer zuerst der Anschlag 45 im Stopfbuchsengehäuse 15 anliegt, da dieser Anschlag 45 in der Offenstellung bei defekten Faltenbälgen als metallische Rückdichtung nach außen dient. Durch den Anschlag 18 können der äußere Balg 50 und der innere Balg 70 nicht weiter durch den Mediendruck oder eigene Federkräfte zusammengedrückt werden. Wesentlich hierbei ist, dass der innere Balg, der, wie bereits ausgeführt, auf Druck vorgespannt ist, nach Abschluss des Öffnungsvorganges unter einer geringen Zugbeanspruchung steht, wohingegen der äußere Balg, der zunächst auf Zug beansprucht ist, in der Endstellung auf Druck belastet ist. Das heißt, es hat in jedem Fall keine Überbeanspruchung der einzelnen Bälge stattgefunden, so dass die Vorrichtung insgesamt eine längere Lebensdauer erwarten lässt.

## Patentansprüche

1. Rohrabsperrvorrichtung umfassend eine Spindel (40), die mit einem im Gehäuse (20) angeordneten Absperrorgan (80) in Verbindung steht, wobei die Spindel in einem Gehäuseoberteil (10) axial verschieblich gelagert ist, wobei das Gehäuseoberteil (10) einen Gehäusedeckel (11) aufweist, der auf dem Gehäuse (20) aufsitzt, wobei der Innenraum des Gehäusedeckels (11) mit dem durch das Gehäuse (20) geführten Medium in Verbindung steht,
**dadurch gekennzeichnet,**
**dass** die Spindel (40) an ihrem unteren, dem Absperrorgan (80) zugewandten Ende einen Ring (60) aufweist, wobei an dem Ring (60) mindestens zwei konzentrisch zueinander angeordnete Bälge (50, 70) vorgesehen sind, wobei der eine innere Balg (70) mit der Spindel (40) und der andere äußere Balg (50) mit einem Flansch (11 b) des Gehäusedeckels (11) in Verbindung steht.

2. Rohrabsperrvorrichtung nach Anspruch 1,
**dadurch gekennzeichnet,**
**dass** der innere Balg (70) mit der Spindel (40) stoffschlüssig, z. B. durch Schweißen, verbunden ist.

3. Rohrabsperrvorrichtung nach Anspruch 2,
**dadurch gekennzeichnet,**
**dass** der innere Balg (70) an seinem oberen Ende einen Übergangsring (71) zur Verbindung mit der Spindel (40) aufweist.

4. Rohrabsperrvorrichtung nach Anspruch 1,
**dadurch gekennzeichnet,**
**dass** der Ring (60) beweglich auf der Spindel (40) angeordnet ist.

5. Rohrabsperrvorrichtung nach Anspruch 1,
**dadurch gekennzeichnet,**
**dass** der Ring (60) axial beweglich im Gehäusedeckel (11) angeordnet ist.

6. Rohrabsperrvorrichtung nach Anspruch 4,
**dadurch gekennzeichnet,**
**dass** die Spindel (40) einen Absatz (44) für den Ring (60) aufweist.

7. Rohrabsperrvorrichtung nach Anspruch 6,
**dadurch gekennzeichnet,**
**dass** der Absatz (44) für den Ring (60) umlaufend ausgebildet ist.

8. Rohrabsperrvorrichtung nach Anspruch 1,
**dadurch gekennzeichnet,**
**dass** der innere Balg (70) von dem Druck des Mediums von innen beaufschlagt wird.

9. Rohrabsperrvorrichtung nach Anspruch 1,
**dadurch gekennzeichnet,**
**dass** der äußere Balg (50) von dem Druck des Mediums außen beaufschlagt wird.

10. Rohrabsperrvorrichtung nach Anspruch 1,
**dadurch gekennzeichnet,**
**dass** der Gehäusedeckel (11) eine die Spindel (40) umgebende Stopfbuchse (14) aufweist.

11. Rohrabsperrvorrichtung nach Anspruch 10,
**dadurch gekennzeichnet,**
**dass** die Stopfbuchse (14) in einem Stopfbuchsengehäuse (15) im Gehäusedeckel (11) angeordnet ist.

12. Rohrabsperrvorrichtung nach Anspruch 1,
**dadurch gekennzeichnet,**
**dass** die Spindel (40) eine Torsionssicherung (90) aufweist.

13. Rohrabsperrvorrichtung nach Anspruch 12,
**dadurch gekennzeichnet,**
**dass** das Gehäuseoberteil (10) eine Gehäusebrücke (12) für die Spindel (40) aufweist, die durch Säulen (13) mit dem Gehäusedeckel (11) verbunden ist, wobei die Säulen (13) die Torsionssicherung (90) aufweisen.

14. Rohrabsperrvorrichtung nach Anspruch 13,
**dadurch gekennzeichnet,**
**dass** die Gehäusebrücke (12) ein Gewinde (12a) zur axial beweglichen Führung der Spindel (40) aufweist.

15. Rohrabsperrvorrichtung nach Anspruch 1,
**dadurch gekennzeichnet,**
**dass** die Bälge (50, 70) mit dem Ring (60) stoffschlüssig, z.B. durch Schweißen , verbunden sind.

## Claims

1. A shut-off device for pipes comprising a spindle (40) communicating with a shut-off device (80) arranged in a housing (20), the spindle being borne in an upper part (10) of the housing so as to be axially slidable, the upper part (10) of the housing being provided with a housing cover (11) resting on the housing (20), the interior space of the housing cover (11) communicating with the medium led through the housing (20),
**characterized in that**
the spindle (40) is provided at its lower end facing the shut-off device (80) with a ring (60), said ring (60) carrying at least two concentrically arranged expansion bellows (50, 70), the inner expansion bellows (70) communicating with the spindle (40) and the other outer expansion bellows (50) communicating with a flange (11b) of the housing cover (11).

2. The shut-off device according to claim 1,
**characterized in that**
the inner bellows (70) is connected to the spindle (40) in a compact way, such as by soldering.

3. The shut-off device according to claim 2,
**characterized in that**
the inner bellows (70) is provided at its upper end with a transition ring (71) for its connection with the spindle (40).

4. The shut-off device according to claim 1,
**characterized in that**
the ring (60) is movably arranged on the spindle (40).

5. The shut-off device according to claim 1,
**characterized in that**
the ring (60) is arranged in the housing cover (11) so as to be axially slidable.

6. The shut-off device according to claim 4,
**characterized in that**
the spindle (40) has a shoulder (44) for the ring (60).

7. The shut-off device according to claim 6,
**characterized in that**
the shoulder (44) for the ring (60) is circumferential.

8. The shut-off device according to claim 1,
**characterized in that**
the inner expansion bellows (70) is impinged from the inside by the pressure of the medium.

9. The shut-off device according to claim 1,
**characterized in that**
the outer bellows (50) is impinged from the outside by the pressure of the medium.

10. The shut-off device according to claim 1,
**characterized in that**
the housing cover (11) is provided with a gland (14) encompassing the spindle (40).

11. The shut-off device according to claim 10,
**characterized in that**
the gland (14) is arranged in a gland casing (15) in the housing cover (11).

12. The shut-off device according to claim 1,
**characterized in that**
the spindle (40) is provided with a safety device against torsioning (90).

13. The shut-off device according to claim 12,
**characterized in that**
the upper part (10) of the housing is provided with a housing bridge (12) for the spindle (40), said bridge being connected to the housing cover (11) by pillars (13), the pillars (13) being provided with the safety device against torsioning (90).

14. The shut-off device according to claim 13,
**characterized in that**
the housing bridge (12) has a thread (12a) intended to guide the spindle (40) in an axially slidable way.

15. The shut-off device according to claim 1,
**characterized in that**
the bellows (50, 70) are connected to the ring (60) in a compact way, such as by soldering.

## Revendications

1. Dispositif d'obturation d'une conduite, comprenant une tige (40) en communication avec un organe d'obturation (80) disposé dans un boîtier (20), la tige étant montée à coulissement axial dans une partie supérieure (10) dudit boîtier, la partie supérieure (10) du boîtier comportant un couvercle de boîtier (11) reposant sur le boîtier (20), l'intérieur du couvercle du boîtier (11) étant en communication avec le fluide traversant le boîtier (20),
**caractérisé en ce que**
la tige (40) comporte, à son extrémité inférieure tournée vers l'organe d'obturation (80), une bague (60), au moins deux soufflets (50, 70) concentriques étant disposés sur ladite bague (60), l'un des soufflets, le soufflet intérieur (70), étant relié à la tige (40) et l'autre soufflet, le soufflet extérieur (50), à une bride (11b) du couvercle de boîtier (11).

2. Dispositif d'obturation d'une conduite selon la revendication 1,
**caractérisé en ce que**
le soufflet intérieur (70) est relié intimement à la tige (40), par soudage par exemple.

3. Dispositif d'obturation d'une conduite selon la revendication 2,
**caractérisé en ce que**
le soufflet intérieur (70) comporte, à son extrémité supérieure, une bague de transition (71) destinée à le relier à la tige (40).

4. Dispositif d'obturation d'une conduite selon la revendication 1,
**caractérisé en ce que**
la bague (60) est montée mobile sur la tige (40).

5. Dispositif d'obturation d'une conduite selon la revendication 1,
**caractérisé en ce que**
la bague (60) est montée à coulissement axial dans le couvercle de boîtier (11).

6. Dispositif d'obturation d'une conduite selon la revendication 4,
**caractérisé en ce que**
la tige (40) comporte un décrochement (44) pour la bague (60).

7. Dispositif d'obturation d'une conduite selon la revendication 6,
**caractérisé en ce que**
le décrochement (44) pour la bague (60) est circonférentiel.

8. Dispositif d'obturation d'une conduite selon la revendication 1,
**caractérisé en ce que**
le soufflet intérieur (70) est soumis à la pression du fluide depuis l'intérieur.

9. Dispositif d'obturation d'une conduite selon la revendication 1,
**caractérisé en ce que**
le soufflet extérieur (50) est soumis à la pression du fluide depuis l'extérieur.

10. Dispositif d'obturation d'une conduite selon la revendication 1,
**caractérisé en ce que**
le couvercle de boîtier (11) comporte un presse-étoupe (14) entourant la tige (40).

11. Dispositif d'obturation d'une conduite selon la revendication 10,
**caractérisé en ce que**
le presse-étoupe (14) est disposé dans le couvercle de boîtier (11) dans un boîtier de presse-étoupe (15).

12. Dispositif d'obturation d'une conduite selon la revendication 1,
**caractérisé en ce que**
la tige (40) comporte une résistance à la torsion (90).

13. Dispositif d'obturation d'une conduite selon la revendication 12,
**caractérisé en ce que**
la partie supérieure (10) du boîtier comporte un pont de boîtier (12) pour la tige (40), ledit pont de boîtier étant relié au couvercle de boîtier (11) par des colonnes (13), les colonnes (13) comportant la résistance à la torsion (90).

14. Dispositif d'obturation d'une conduite selon la revendication 13,
**caractérisé en ce que**
le pont de boîtier (12) comporte un filetage (12a) pour le guidage à coulissement axial de la tige (40).

15. Dispositif d'obturation d'une conduite selon la revendication 1,
**caractérisé en ce que**
les soufflets (50, 70) sont intimement reliés à la bague (60), par soudage par exemple.
